(19) **Europäisches Patentamt**
**European Patent Office**
**Office européen des brevets**

(11) **EP 2 035 281 B1**

(12) **FASCICULE DE BREVET EUROPEEN**

(45) Date de publication et mention
de la délivrance du brevet:
**05.01.2011 Bulletin 2011/01**

(51) Int Cl.:
**B64D 45/04** *(2006.01)* **G05D 1/00** *(2006.01)*
**G05D 1/06** *(2006.01)*

(21) Numéro de dépôt: **07788844.4**

(22) Date de dépôt: **07.06.2007**

(86) Numéro de dépôt international:
**PCT/FR2007/000939**

(87) Numéro de publication internationale:
**WO 2007/144484 (21.12.2007 Gazette 2007/51)**

(54) **PROCEDE ET DISPOSITIF D'ASSISTANCE A L'ATTERRISSAGE POUR AERONEF**

LANDEHILFEVORRICHTUNG UND VERFAHREN FÜR EIN FLUGZEUG

LANDING ASSISTANCE DEVICE AND METHOD FOR AIRCRAFT

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.06.2006 FR 0605157**

(43) Date de publication de la demande:
**18.03.2009 Bulletin 2009/12**

(73) Titulaire: **AIRBUS OPERATIONS (SAS)**
**31060 Toulouse (FR)**

(72) Inventeur: **CONSTANS, Florian**
**F-68400 Riedisheim (FR)**

(74) Mandataire: **Bonnetat, Christian**
**Bloch & Bonnétat**
**23bis, rue de Turin**
**75008 Paris (FR)**

(56) Documents cités:
**US-A1- 2004 044 446    US-A1- 2004 075 586**
**US-A1- 2004 167 685**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé et un dispositif d'assistance à l'atterrissage pour un aéronef.

On sait que, dans la phase d'approche devant conduire à l'atterrissage d'un aéronef sur une piste d'atterrissage, le pilotage de ce dernier est particulièrement délicat. Dans cette phase d'approche, le pilote dispose de nombreuses informations, dont certaines doivent lui permettre d'éviter un toucher de queue ou de voilure avec le sol, un atterrissage dur ou encore une sortie de piste. Parmi ces informations figurent principalement la vitesse de l'aéronef, la pente de l'aéronef et la hauteur de l'aéronef par rapport au sol, ces trois informations étant affichées dans le cockpit, de sorte que le pilote peut aisément les surveiller. De plus, la vue de l'environnement fournit au pilote une perception de son plan d'approche.

Par exemple, par le document US 2004/075 586 A1, on connaît déjà un procédé d'assistance à l'atterrissage pour un aéronef en phase d'approche se trouvant à une hauteur actuelle h et descendant vers une piste d'atterrissage en suivant, avec une vitesse d'approche actuelle V, une trajectoire d'approche actuelle formant avec ladite piste d'atterrissage un angle d'approche actuel $\gamma$, ladite vitesse d'approche actuelle V et ledit angle d'approche actuel $\gamma$ devant idéalement être proches, respectivement, d'une vitesse d'approche de référence constante Vr et d'un d'angle d'approche de référence constant $\gamma$r associés à ladite piste d'atterrissage.

On remarquera que le niveau d'énergie totale de l'aéronef, combinaison de sa vitesse et de sa hauteur, est un paramètre essentiel pour estimer le risque de sortie de piste. Toutefois, il n'est pas toujours estimable par le pilote. De plus, le niveau d'énergie peut être altéré par le vent.

L'objet de la présente invention est donc d'informer le pilote sur l'état énergétique de son aéronef à tout instant de la phase d'approche.

A cette fin, selon l'invention, le procédé d'assistance à l'atterrissage du type rappelé ci-dessus est remarquable en ce que :

- on prédétermine, de part et d'autre de ladite vitesse d'approche de référence Vr, une plage de valeurs de vitesse d'approche aptes à permettre un arrêt complet dudit aéronef sur ladite piste d'atterrissage dans le cas où l'angle d'approche actuel $\gamma$ est au moins approximativement égal audit angle d'approche de référence $\gamma$r, ladite plage de valeurs de vitesse d'approche étant délimitée par une valeur limite inférieure Vinf et par une valeur limite supérieure Vsup ;

- un prédétermine, de part et d'autre dudit angle d'approche de référence $\gamma$r, une plage de valeurs d'angle d'approche aptes à permettre un arrêt complet dudit aéronef sur ladite piste d'atterrissage dans le cas où la vitesse d'approche actuelle V est au moins approximativement égale à la vitesse d'approche de référence Vr, ladite plage de valeurs d'angle d'approche étant délimitée par une valeur limite inférieure $\gamma$inf et par une valeur limite supérieure $\gamma$sup ;

- on calcule :

  ■ un seuil inférieur d'énergie totale Einf, correspondant à la situation pour laquelle la vitesse d'approche actuelle V et l'angle d'approche actuel $\gamma$ sont respectivement égaux à ladite valeur limite inférieure Vinf et à ladite valeur limite inférieure $\gamma$inf,
  ■ un seuil supérieur d'énergie totale Esup, correspondant à la situation pour laquelle la vitesse d'approche actuelle V et l'angle d'approche actuel $\gamma$ sont respectivement égaux à ladite valeur limite supérieure Vsup et à ladite valeur limite supérieure $\gamma$sup, et
  ■ l'énergie totale actuelle E dudit aéronef ; et

- on procède à la comparaison de ladite énergie totale actuelle E avec lesdits seuils inférieur Einf et supérieur Esup d'énergie totale pour obtenir une indication sur la possibilité théorique pour ledit aéronef de s'arrêter sur ladite piste d'atterrissage.

La présente invention met à profit le fait que, à chaque piste d'atterrissage, est associé un ensemble de règles de procédure, dont celles qui concernent l'atterrissage recommandent (ou imposent) une vitesse d'approche de référence et un angle d'approche de référence. De plus, la présente invention constate que, dans le transport aérien civil, le pilotage des aéronefs respecte, autant que cela est possible, ces règles de procédure d'atterrissage.

Ainsi, selon l'invention, ledit seuil inférieur d'énergie totale, qui considère la vitesse d'approche et la pente d'approche les plus faibles possibles, représente un niveau d'énergie plancher pour que l'aéronef puisse réussir un atterrissage correct. Au contraire, à cette dernière fin, ledit seuil supérieur d'énergie totale, qui prend en compte la vitesse d'approche et la pente les plus fortes possibles, constitue un niveau d'énergie plafond. L'énergie totale actuelle de l'aéronef devra donc se situer entre ces niveaux d'énergie totale plancher et plafond. Au-dessous du niveau d'énergie totale plancher, l'aéronef présente un déficit d'énergie totale que le pilote devra chercher à combler par action sur les moteurs et/ou les gouvernes de profondeur. En revanche, au-dessus de ce niveau d'énergie totale plafond, l'énergie totale de l'aéronef est excédentaire et le pilote devra chercher à la dissiper à l'aide des moteurs, des gouvernes de profondeur, des aérofreins, etc ...

Bien entendu, la comparaison de l'énergie totale actuelle E avec lesdits seuils inférieur Einf et supérieur Esup permet seulement de déterminer la possibilité que l'aéronef s'arrête ou non : l'arrêt effectif de l'aéronef sur la piste (avec ou sans sortie de piste) dépend des autres paramètres usuels, tels que l'état de la piste (pluie, verglas, ...), l'état des pneumatiques du train d'atterrissage, etc ...

La comparaison entre l'énergie totale actuelle E de l'aéronef, d'une part, et lesdits seuils inférieur Einf et supérieur Esup d'énergie totale peut être réalisée de nombreuses façons différentes.

Par exemple, on peut former l'indice I1 suivant :

$$I1 = \frac{E - Einf}{Esup - Einf}$$

indice qui doit être compris entre 0 et 1 pour correspondre à un niveau d'énergie acceptable en vue d'une approche et d'un atterrissage corrects.

En variante, on peut :

- calculer une énergie totale de référence Er correspondant à la situation pour laquelle la vitesse d'approche et l'angle d'approche sont respectivement égaux à la vitesse d'approche de référence Vr et à l'angle d'approche de référence γr ; et
- procéder à la comparaison entre ladite énergie totale actuelle E et ladite énergie totale de référence Er, le résultat de cette comparaison étant lui-même comparé à au moins l'un desdits seuils inférieur Einf et supérieur Esup.

Dans ce cas :

- si E est supérieur à Er, on peut comparer E-Er à Esup-Er ; et
- si E est inférieur à Er, on peut comparer E-Er à Einf-Er.

Lesdites valeurs limites inférieure Vinf et supérieure Vsup de vitesse d'approche sont, de préférence, au moins approximativement égales à ladite vitesse d'approche de référence Vr, respectivement diminuée et augmentée de quelques kts. Par exemple, la valeur limite inférieur Vinf peut être égale à Vr-3kts, alors que la valeur limite supérieure Vsup peut être égale à Vr + 10kts.

De façon semblable, lesdites valeurs limites inférieure γinf et supérieure γsup d'angle d'approche sont, avantageusement, au moins approximativement égales audit angle d'approche de référence γr, respectivement diminué et augmenté de quelques dixièmes de degré. Par exemple, dans le cas usuel où l'angle d'approche de référence γr est voisin de 3°, les valeurs limites inférieure et supérieure peuvent être égales à γr-0,3° et à γr+0,3°. Bien entendu, les écarts d'angle sont choisis en accord avec les plages autorisées pour la piste d'atterrissage concernée.

Le résultat de ladite comparaison, qui est représentatif du fait que le niveau d'énergie totale de l'aéronef est correct, excédentaire ou déficitaire, peut être porté à la connaissance du pilote par tout moyen connu, tel que alarmes ou alertes sonores ou visuelles, affichage, etc... Ainsi, le cas échéant, le pilote peut tenter, en connaissance de cause, de corriger un niveau d'énergie incorrect ou même d'effectuer une manoeuvre de remise des gaz (go around). A cet effet, il est important que le résultat de la comparaison soit affiché à proximité du pilote, notamment sur un écran de pilotage usuel fréquemment regardé par ce dernier, tel que l'écran PFD.

On remarquera que la variation d'énergie totale d'un aéronef est relativement lente, de sorte qu'il peut être avantageux de fournir au pilote, en complément, une tendance plus rapide de la situation de son aéronef. On peut ainsi prévoir d'associer audit résultat de ladite comparaison d'énergie totale une information de prédiction d'arrêt complet de l'aéronef sur ladite piste d'atterrissage, par exemple telle que celle engendrée par la mise en oeuvre du procédé décrit dans la demande de brevet français n°06 01395 déposée le 17 février 2006.

Pour la mise en oeuvre du procédé conforme à la présente invention, on peut utiliser un dispositif comportant :

- des moyens de calcul :

  • recevant au moins des informations concernant la masse actuelle m, la hauteur actuelle h, la vitesse d'approche actuelle V et l'angle d'approche actuel γ de l'aéronef, ainsi que :

    + la valeur limite inférieure de vitesse Vinf et la valeur limite supérieure de vitesse Vsup délimitant une plage de valeurs de vitesse d'approche aptes à permettre un arrêt complet dudit aéronef sur la piste d'atterrissage dans le cas où l'angle d'approche actuel $\gamma$ est au moins approximativement égal audit angle d'approche de référence $\gamma r$,

+ la valeur limite inférieure d'angle d'approche $\gamma$inf et la valeur limite supérieure d'angle d'approche $\gamma$sup délimitant une plage de valeurs d'angle d'approche aptes à permettre un arrêt complet dudit aéronef sur la piste d'atterrissage dans le cas où la vitesse d'approche actuelle V est au moins approximativement égale à la vitesse d'approche de référence Vr, et

+ le cas échéant, la vitesse d'approche de référence Vr et l'angle d'approche de référence $\gamma r$ ; et

• calculant :

+ un seuil inférieur d'énergie totale Einf, correspondant à la situation pour laquelle la vitesse d'approche actuelle V et l'angle d'approche actuel $\gamma$ sont respectivement égaux à ladite valeur limite inférieure Vinf et à ladite valeur limite inférieure $\gamma$inf,

+ un seuil supérieur d'énergie totale Esup, correspondant à la situation pour laquelle la vitesse d'approche actuelle V et l'angle d'approche actuel $\gamma$ sont respectivement égaux à ladite valeur limite supérieure Vsup et à ladite valeur limite supérieure $\gamma$sup,

+ l'énergie totale actuelle E dudit aéronef ; et

+ à l'aide desdits seuils inférieur et supérieur d'énergie totale Einf et Esup, au moins un indice dont la valeur est représentative du fait que le niveau de ladite énergie totale actuelle E de l'aéronef est correct, excédentaire ou déficitaire ; et

- des moyens de comparaison comparant ledit indice à au moins une valeur de seuil correspondant à une transition entre un niveau d'énergie totale correct et un niveau d'énergie totale excédentaire ou déficitaire, lesdits moyens de comparaison étant aptes à actionner au moins un dispositif d'alerte ou d'alarme, au moins dans le cas où ledit niveau de l'énergie totale actuelle E de l'aéronef est excédentaire ou déficitaire.

Les figures de dessin annexé feront bien comprendre comment l'invention peut être réalisée. Sur ces figures, des références identiques désignent des éléments semblables.

La figure 1 est un schéma illustrant le procédé conforme à la présente invention.

La figure 2 est un schéma synoptique d'un dispositif pour la mise en oeuvre du procédé selon l'invention.

La figure 3 montre un exemple d'affichage d'un signal d'alerte engendré par la mise en oeuvre du procédé de l'invention.

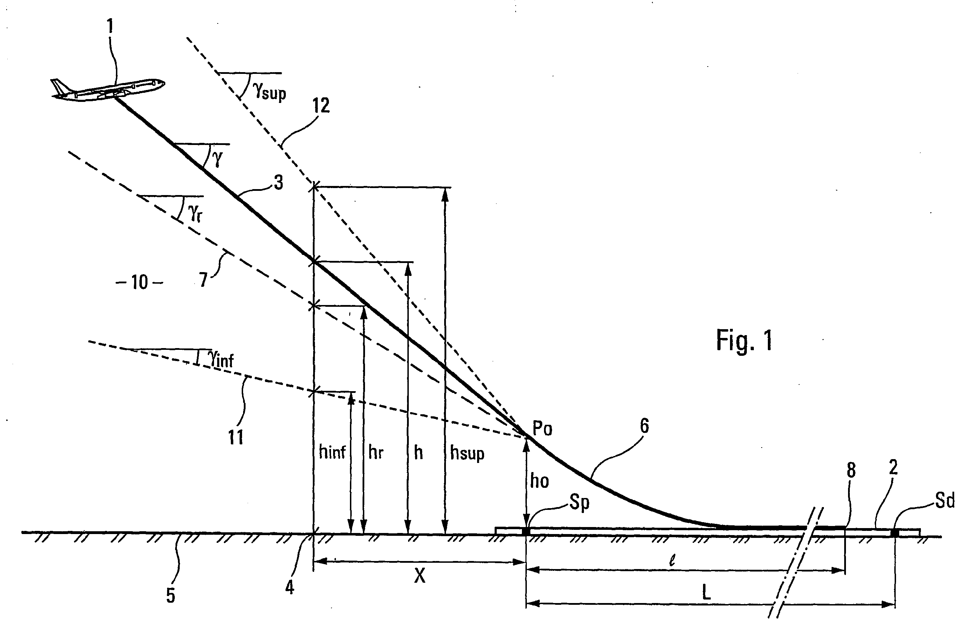

Dans la situation représentée schématiquement sur la figure 1, un avion 1 est en phase d'approche en vue d'atterrir sur une piste d'atterrissage 2, dont la longueur utile L est délimitée entre un seuil proximal Sp et un seuil distal Sd. L'avion 1 suit une trajectoire d'approche actuelle 3, présentant un angle d'approche actuel $\gamma$, en descendant en direction de la piste d'atterrissage 2 avec une vitesse d'approche actuelle V. Quand l'avion 1 se trouve à la distance horizontale X dudit seuil proximal Sp, c'est-à-dire à la verticale du point 4 du sol 5 distant de X du seuil proximal Sp, sa hauteur actuelle sur la trajectoire actuelle 3 est égale à h.

Selon les règles de procédure d'atterrissage attachées à la piste d'atterrissage 2, pour optimiser les chances d'un atterrissage correct, la trajectoire d'approche actuelle 3 de l'avion 1 doit passer par un point de référence Po se trouvant à la hauteur réglementaire ho au-dessus du seuil proximal Sp et correspondant au début de l'arrondi 6 de la trajectoire 3. De plus, selon ces règles de procédure d'atterrissage, l'avion 1 devrait idéalement se trouver sur une trajectoire d'approche de référence 7, passant bien évidemment par le point de référence Po et présentant l'angle d'approche de référence $\gamma r$, la vitesse dudit avion sur ladite trajectoire d'approche de référence 7 étant égale à une vitesse d'approche de référence Vr. Dans une telle situation idéale, l'aéronef 1 serait certain, sauf circonstance imprévue, de pouvoir s'arrêter en un point 8 de la piste 2, éloigné du seuil proximal Sp de la piste 2 d'une distance $\ell$ inférieure à la longueur utile L de celle-ci. A la verticale dudit point 4, la hauteur de ladite trajectoire d'approche de référence 7 est désignée par hr.

Conformément à la présente invention, afin de pouvoir prédire si l'aéronef avec sa vitesse d'approche actuelle V et sa pente actuelle $\gamma$ a la possibilité de s'arrêter complètement sur la piste 2, on commence par :

- prédéterminer (d'une façon non visible sur la figure 1), de part et d'autre de la vitesse d'approche de référence Vr, une plage de valeurs de vitesse d'approche aptes à permettre un arrêt complet de l'avion 1 sur la piste 2 dans le cas où l'angle d'approche actuel $\gamma$ est au moins approximativement égal à l'angle d'approche de référence $\gamma r$, ladite plage de valeurs de vitesse d'approche étant délimitée par une valeur limite inférieure Vinf et par une valeur limite supérieure Vsup ; et

- prédéterminer, de part et d'autre dudit angle d'approche de référence $\gamma r$, une plage 10 de valeurs d'angle d'approche aptes à permettre un arrêt complet de l'avion 1 sur la piste 2 dans le cas où la vitesse d'approche actuelle V est au moins approximativement égale à la vitesse d'approche de référence Vr, ladite plage 10 étant délimitée par une valeur limite inférieure γinf correspondant à une trajectoire limite inférieure d'approche 11 et par une valeur limite supérieure γsup correspondant à une trajectoire limite supérieure d'approche 12. A la verticale dudit point 4, les hauteurs desdites trajectoires limites inférieure et supérieure d'approche 11 et 12 sont respectivement désignées par hinf et hsup.

Après la prédétermination de ces deux plages de valeurs de vitesse d'approche et d'angle d'approche, on calcule :

- l'énergie totale actuelle E de l'avion 1 sur la trajectoire d'approche actuelle 3, qui est égale à

$$E = \frac{1}{2} m\, V^2 + mgh, \qquad (1)$$

h étant connue à bord de l'avion 1 et m étant la masse de celui-ci et g l'accélération de la pesanteur ;
- un seuil inférieur d'énergie totale Einf, correspondant à la situation pour laquelle la vitesse et l'angle d'approche de l'avion 1 seraient respectivement égaux à la valeur limite inférieure Vinf et à la valeur limite inférieure γinf, ledit seuil inférieur étant donc égal à

$$Einf = \frac{1}{2} m\, Vinf^2 + mghinf, \text{ avec } hinf = ho + X\tan\gamma inf \qquad (2)$$

tan γinf étant la tangente de la valeur limite inférieure γinf d'angle d'approche et la distance X étant égale à h/tanγ, tanγ étant la tangente de l'angle d'approche actuel γ ; et
- un seuil supérieur d'énergie totale Esup, correspondant à la situation pour laquelle la vitesse et l'angle d'approche de l'avion 1 seraient respectivement égaux à la valeur limite supérieure Vsup et à la valeur limite supérieure γsup, ledit seuil étant donc égal à

$$Esup = \frac{1}{2} m\, Vsup^2 + mghsup, \text{ avec } hsup = ho + X\tan\gamma sup \qquad (3)$$

tan γsup étant la tangente de la valeur limite supérieure γsup d'angle d'approche.

Ensuite, on compare l'énergie totale actuelle E de l'avion 1 auxdits seuils inférieur et supérieur d'énergie totale Einf et Esup.
A cet effet, on peut former un indice I1, donné par l'expression

$$I1 = \frac{E - Einf}{Esup - Einf} \qquad (4)$$

On voit que :

- si I1 est supérieur à 1, l'énergie totale actuelle E de l'avion 1 est trop élevée et le risque de sortie longitudinale de piste est réel ;
- si I1 est inférieur à 0, l'énergie totale actuelle E de l'avion 1 est trop faible et ce dernier risque de ne pas pouvoir se poser au-delà du seuil proximal de piste Sp ; et
- en revanche, si I1 est compris entre 0 et 1, l'énergie totale actuelle E de l'avion 1 correspond à une approche bien exécutée, permettant l'arrêt de l'avion 1 sur la piste 2.

En vue de la comparaison de l'énergie totale actuelle E auxdits seuils inférieur et supérieur d'énergie totale Einf et Esup, on peut, en variante, passer par l'intermédiaire d'une énergie totale de référence Er correspondant à la situation pour laquelle la vitesse d'approche et l'angle d'approche de l'avion 1 sont respectivement égaux à la vitesse d'approche de référence Vr et à l'angle d'approche de référence γr. Cette énergie totale de référence est donc égale à

$$Er = \frac{1}{2} m\, Vr^2 + mghr, \text{ avec } hr = ho + X\tan \gamma r \quad (5)$$

tan γr étant la tangente de l'angle d'approche de référence γr.

Dans le cas où E est supérieur à Er, on peut former l'indice

$$I2 = \frac{E - Er}{E\,sup - Er} \quad (6)$$

qui doit rester inférieur à 1 pour correspondre à une approche correcte. Si I2 est supérieur à 1, l'avion 1 présente un excédent d'énergie, lui interdisant de s'arrêter sur la piste 2.

Dans le cas où E est inférieur à Er, on peut former l'indice

$$I3 = \frac{E - Er}{E\,inf - Er} \quad (7)$$

qui doit être supérieur à 1 pour correspondre à une approche correcte de l'avion 1 sur la piste 2. Si I3 est inférieur à 1, l'énergie totale de l'avion 1 n'est pas suffisante pour une approche correcte de la piste 2.

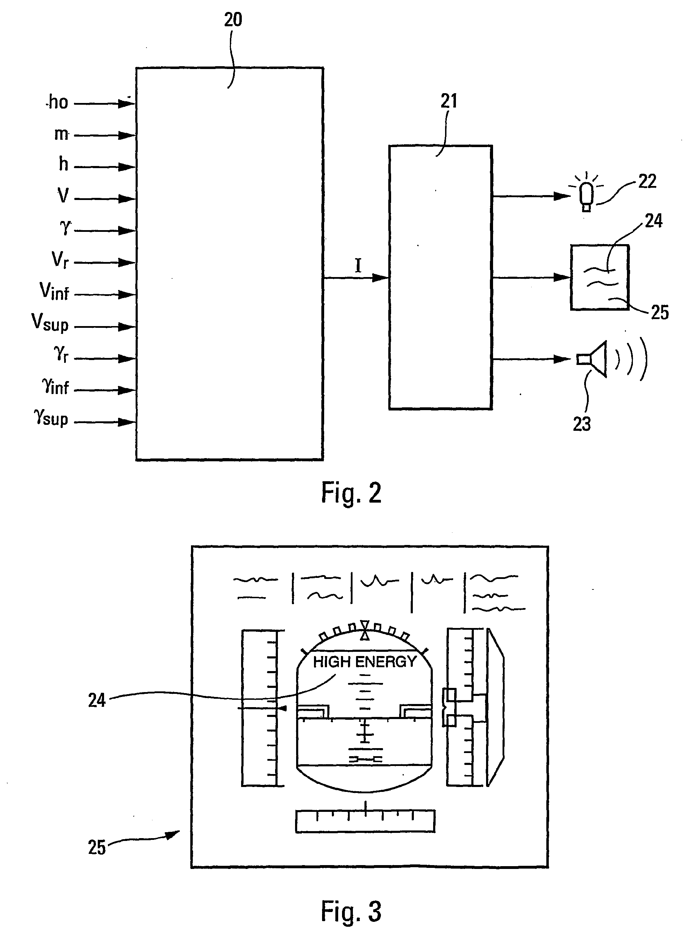

Pour effectuer les calculs et comparaisons mentionnés ci-dessus, on peut utiliser le dispositif illustré sur la figure 2. Ce dispositif comporte un calculateur 20 recevant à ses entrées la hauteur réglementaire ho du point de référence Po, la masse m, la hauteur h, la vitesse d'approche actuelle V, l'angle d'approche actuel γ, la valeur limite inférieure de vitesse Vinf, la valeur limite supérieure de vitesse Vsup, la valeur limite inférieure d'angle d'approche γinf et la valeur limite supérieure d'angle d'approche γsup. Le calculateur 20 peut recevoir de plus à ses entrées la vitesse d'approche de référence Vr et l'angle d'approche de référence γr.

A l'aide des expressions (1), (2), (3) et (4), le calculateur 20 calcule respectivement l'énergie totale actuelle E, le seuil inférieur d'énergie totale Einf et le seuil supérieur d'énergie totale Esup. Il peut de plus calculer l'indice I1. A l'aide des expressions (5), (6) et (7), le calculateur 20 peut en variante calculer l'énergie totale de référence Er et les indices I2 et I3.

Le calculateur 20 transmet un indice I, représentatif de l'indice I1 ou des indices I2 et I3, à un comparateur 21 (qui peut faire partie intégrante dudit calculateur 20) apte à comparer la valeur dudit indice I à au moins un seuil (égal à 0 ou à 1 comme il résulte de ce qui précède) et à activer des alarmes ou alertes visuelles 22 et/ou sonores 23 et/ou apte à afficher des messages d'alarme ou d'alerte 24 sur des écrans 25, dans le cas où la valeur de l'indice I révèle un excédent ou un défaut d'énergie ne permettant pas à l'avion 1 d'effectuer une approche et un atterrissage corrects.

Sur la figure 3, on a représenté, comme écran 25, un écran PFD (Primary Flight Display) sur lequel est affiché le message 24 "High Energy" informant le pilote que l'énergie de son avion est excessive pour un atterrissage correct. Bien entendu, en cas de manque d'énergie, le message 24 pourrait être, par exemple, "Low Energy".

Lorsqu'il est correct, le niveau d'énergie totale de l'avion peut également être affiché sur ledit écran 24, par exemple sous la forme "Correct Energy".

## Revendications

1.   Procédé d'assistance à l'atterrissage pour un aéronef (1) en phase d'approche se trouvant à une hauteur actuelle h et descendant vers une piste d'atterrissage (2) en suivant, avec une vitesse d'approche actuelle V, une trajectoire d'approche actuelle (3) formant avec ladite piste d'atterrissage (2) un angle d'approche actuel γ, ladite vitesse d'approche actuelle V et ledit angle d'approche actuel γ devant idéalement être proches, respectivement, d'une vitesse d'approche de référence constante Vr et d'un d'angle d'approche de référence constant γr associés à ladite piste d'atterrissage (2),
**caractérisé en ce que** :

- on prédétermine, de part et d'autre de ladite vitesse d'approche de référence Vr, une plage de valeurs de vitesse d'approche aptes à permettre un arrêt complet dudit aéronef (1) sur ladite piste d'atterrissage (2) dans le cas où l'angle d'approche actuel γ est au moins approximativement égal audit angle d'approche de référence γr, ladite plage de valeurs de vitesse d'approche étant délimitée par une valeur limite inférieure Vinf et par une valeur limite supérieure Vsup ;

- on prédétermine, de part et d'autre dudit angle d'approche de référence γr, une plage (10) de valeurs d'angle d'approche aptes à permettre un arrêt complet dudit aéronef (1) sur ladite piste d'atterrissage (2) dans le cas où la vitesse d'approche actuelle V est au moins approximativement égale à la vitesse d'approche de référence Vr, ladite plage (10) de valeurs d'angle d'approche étant délimitée par une valeur limite inférieure γinf et par une valeur limite supérieure γsup ;

- on calcule :

■ un seuil inférieur d'énergie totale Einf, correspondant à la situation pour laquelle la vitesse d'approche actuelle V et l'angle d'approche actuel γ sont respectivement égaux à ladite valeur limite inférieure Vinf et à ladite valeur limite inférieure γinf,

■ un seuil supérieur d'énergie totale Esup, correspondant à la situation pour laquelle la vitesse d'approche actuelle V et l'angle d'approche actuel γ sont respectivement égaux à ladite valeur limite supérieure Vsup et à ladite valeur limite supérieure γsup, et

■ l'énergie totale actuelle E dudit aéronef ; et

- on procède à la comparaison de ladite énergie totale actuelle E avec lesdits seuils inférieur Einf et supérieur Esup d'énergie totale pour obtenir une indication sur la possibilité théorique pour ledit aéronef de s'arrêter sur ladite piste d'atterrissage.

2. Procédé selon la revendication 1,
**caractérisé en ce que**, pour procéder à ladite comparaison, on calcule un indice I1 donné par l'expression

$$I1 = \frac{E - Einf}{Esup - Einf}$$

3. Procédé selon la revendication 1,
**caractérisé en ce que** :

- on calcule une énergie totale de référence Er correspondant à la situation pour laquelle la vitesse d'approche et l'angle d'approche sont respectivement égaux à la vitesse d'approche de référence Vr et à l'angle d'approche de référence γr ; et

- on procède à la comparaison entre ladite énergie totale actuelle E et ladite énergie totale de référence Er, le résultat de cette comparaison étant lui-même comparé à au moins l'une desdites énergies totales de seuil inférieur Einf et de seuil supérieur Esup.

4. Procédé selon la revendication 3,
**caractérisé en ce que** :

- si E est supérieur à Er, on peut comparer E-Er à Esup-Er ; et
- si E est inférieur à Er, on peut comparer Er-E à Er-Einf.

5. Procédé selon l'une des revendications 1 à 4,
**caractérisé en ce que** lesdites valeurs limites inférieure Vinf et supérieure Vsup de vitesse d'approche sont, de préférence, au moins approximativement égales à ladite vitesse d'approche de référence Vr, respectivement diminuée et augmentée de quelques kts.

6. Procédé selon l'une des revendications 1 à 5,

**caractérisé en ce que** lesdites valeurs limites inférieure γinf et supérieure γsup d'angle d'approche sont au moins approximativement égales audit angle d'approche de référence γr, respectivement diminué et augmenté de quelques dixièmes de degré.

7.  Procédé selon l'une des revendications 1 à 6,
    **caractérisé en ce que** le résultat de ladite comparaison est affiché à proximité du pilote de l'aéronef.

8.  Procédé selon l'une des revendications 1 à 7,
    **caractérisé en ce que**, audit résultat de ladite comparaison, on associe une information de prédiction d'arrêt complet de l'aéronef sur ladite piste d'atterrissage.

9.  Dispositif d'assistance à l'atterrissage pour un aéronef (1) en phase d'approche se trouvant à une hauteur actuelle h et descendant vers une piste d'atterrissage (2) en suivant, avec une vitesse d'approche actuelle V, une trajectoire d'approche actuelle (3) formant avec ladite piste d'atterrissage (2) un angle d'approche actuel γ, ladite vitesse d'approche actuelle V et ledit angle d'approche actuel γ devant idéalement être proches, respectivement, d'une vitesse d'approche de référence constante Vr et d'un d'angle d'approche de référence constant γr associés à ladite piste d'atterrissage (2),
    **caractérisé en ce qu'**il comporte :

    - des moyens de calcul (20) :

        • recevant au moins des informations concernant la masse actuelle m, la hauteur actuelle h, la vitesse d'approche actuelle V et l'angle d'approche actuelle γ de l'aéronef (1), ainsi que :

            + la valeur limite inférieure de vitesse Vinf et la valeur limite supérieure de vitesse Vsup délimitant une plage de valeurs de vitesse d'approche aptes à permettre un arrêt complet dudit aéronef (1) sur la piste d'atterrissage (2) dans le cas où l'angle d'approche actuel γ est au moins approximativement égal audit angle d'approche de référence γr,
            + la valeur limite inférieure d'angle d'approche γinf et la valeur limite supérieure d'angle d'approche γsup délimitant une plage de valeurs d'angle d'approche aptes à permettre un arrêt complet dudit aéronef (1) sur la piste d'atterrissage (2) dans le cas où la vitesse d'approche actuelle V est au moins approximativement égale à la vitesse d'approche de référence Vr, et
            + le cas échéant , la vitesse d'approche de référence Vr et l'angle d'approche de référence γ2 ; et

        • calculant :

            + un seuil inférieur d'énergie totale Einf, correspondant à la situation pour laquelle la vitesse d'approche actuelle V et l'angle d'approche actuel γ sont respectivement égaux à ladite valeur limite inférieure Vinf et à ladite valeur limite inférieure γinf,
            + un seuil supérieur d'énergie totale Esup, correspondant à la situation pour laquelle la vitesse d'approche actuelle V et l'angle d'approche actuel γ sont respectivement égaux à ladite valeur limite supérieure Vsup et à ladite valeur limite supérieure γsup,
            + l'énergie totale actuelle E dudit aéronef ; et
            + à l'aide desdits seuils inférieur et supérieur d'énergie totale Einf et Esup, au moins un indice (I1, I2, I3) dont la valeur est représentative du fait que le niveau de ladite énergie totale actuelle E de l'aéronef (1) est correct, excédentaire ou déficitaire ; et

    - des moyens de comparaison (21) comparant ledit indice (I1, I2, I3) à au moins une valeur de seuil correspondant à une transition entre un niveau d'énergie totale correct et un niveau d'énergie totale excédentaire ou déficitaire, lesdits moyens de comparaison étant aptes à actionner au moins un dispositif d'alerte ou d'alarme (22, 23, 25), au moins dans le cas où ledit niveau de l'énergie totale actuelle E de l'aéronef (1) est excédentaire ou déficitaire.

10. Dispositif selon la revendication 9,
    **caractérisé en ce qu'**au moins un dispositif d'alerte ou d'alarme (25) est constitué par un écran de pilotage usuel sur lequel peut s'inscrire un message d'alerte ou d'alarme (24) relatif audit niveau d'énergie totale actuel sous l'action desdits moyens de comparaison (21).

**Claims**

1. A landing assistance method for an aircraft (1) in approach phase located at a current height h and descending toward a runway (2) following, with a current approach speed V, a current approach trajectory (3) forming with said runway (2) a current approach angle γ, said current approach speed V and said current approach angle γ ideally needing to be close, respectively, to a constant reference approach speed Vr and a constant reference approach angle γ associated with said runway (2),
**characterized in that**:

  - a range of approach speed values is predetermined, either side of said reference approach speed Vr, that will allow for a complete stoppage of said aircraft (1) on said runway (2) in the case where the current approach angle γ is at least approximately equal to said reference approach angle γr, said range of approach speed values being delimited by a lower limit value Vinf and by an upper limit value Vsup;
  - a range (10) of approach angle values is predetermined, either side of said reference approach angle γr, that will allow for a complete stoppage of said aircraft (1) on said runway (2) in the case where the current approach speed V is at least approximately equal to the reference approach speed Vr, said range (10) of approach angle values being delimited by a lower limit value γinf and by an upper limit value γsup;
  - there are calculated:

    • a lower total energy threshold Einf, corresponding to the situation for which the current approach speed V and the current approach angle γ are respectively equal to said lower limit value Vinf and said lower limit value γinf,
    • an upper total energy threshold Esup, corresponding to the situation for which the current approach speed V and the current approach angle γ are respectively equal to said upper limit value Vsup and said upper limit value γsup, and
    • the current total energy E of said aircraft; and

  - said current total energy E is compared with said lower Einf and upper Esup total energy thresholds to obtain an indication as to the theoretical possibility for said aircraft to stop on said runway.

2. The method as claimed in claim 1, **characterized in that**, to carry out said comparison, an index I1 is calculated, by the expression

$$Il = \frac{E - E\inf}{E\sup - E\inf}$$

3. The method as claimed in claim 1, **characterized in that**:

  - a reference total energy Er is calculated that corresponds to the situation for which the approach speed and the approach angle are respectively equal to the reference approach speed Vr and the reference approach angle γr; and
  - said current total energy E and said reference total energy Er are compared, the result of this comparison being itself compared to at least one of said lower Einf and upper Esup total energy thresholds.

4. The method as claimed in claim 3, **characterized in that**:

  - if E is greater than Er, E-Er can be compared to Esup-Er; and
  - if E is less than Er, Er-E can be compared to Er-Einf.

5. The method as claimed in one of claims 1 to 4, **characterized in that** said lower Vinf and upper Vsup approach speed limit values are, preferably, at least approximately equal to said reference approach speed Vr, respectively minus and plus a few kts.

6. The method as claimed in one of claims 1 to 5, **characterized in that** said lower γinf and upper γsup approach angle limit values are at least approximately equal to said reference approach angle γr, respectively minus and plus a few tenths of a degree.

7. The method as claimed in one of claims 1 to 6, **characterized in that** the result of said comparison is displayed near to the pilot of the aircraft.

8. The method as claimed in one of claims 1 to 7, **characterized in that** a prediction indication as to the complete stoppage of the aircraft on said runway is associated with said result of said comparison.

9. A landing assistance device for an aircraft (1) in approach phase located at a current height h and descending toward a runway (2) following, with a current approach speed V, a current approach trajectory (3) forming with said runway (2) a current approach angle γ, said current approach speed V and said current approach angle γ ideally needing to be close, respectively, to a constant reference approach speed Vr and a constant reference approach angle γr associated with said runway (2),
**characterized in that** it comprises:

 - computation means (20) :

  • receiving at least the information concerning the current mass m, the current height h, the current approach speed V and the current approach angle γ of the aircraft (1), as well as :

   + the lower limit speed value Vinf and the upper limit speed value Vsup delimiting a range of approach speed values that will allow for a complete stoppage of said aircraft (1) on said runway (2) in the case where the current approach angle γ is at least approximatively equal to said reference approach angle γr,
   + the lower limit approach angle value γinf and the upper limit approach angle value γsup delimiting a range of approach angle values that will allow for a complete stoppage of said aircraft (1) on said runway (2) in the case where the current approach speed V is at least approximatively equal to the reference approach speed Vr, and
   + possibly, the reference approach speed Vr and the reference approach angle γr ; and

  • computing :

   + a lower total energy threshold Einf, corresponding to the situation for which the current approach speed V and the current approach angle γ are respectively equal to said lower limit value Vinf and said lower limit value γinf,
   + an upper total energy threshold Esup, corresponding to the situation for which the current approach speed V and the current approach angle γ are respectively equal to said upper limit value Vsup and said upper limit value γsup, and
   + the current total energy E of said aircraft; and
   + from said lower and upper total energy thresholds Einf and Esup, at least one index (I1, I2, I3), the value of which is representative of the fact that the level of said current total energy E of the aircraft (1) is correct, excessive or deficient; and
   + comparison means (21) comparing said index (I1, I2, I3) to at least one threshold value corresponding to a transition between a correct total energy level and an excessive or deficient total energy level, said comparison means being able to actuate at least one warning or alarm device (22, 23, 25), at least in the case where said current total energy level E of the aircraft (1) is excessive or deficient.

10. The device as claimed in claim 9, **characterized in that** at least one warning or alarm device (25) comprises a standard piloting screen on which a warning or alarm message (24) can be written concerning said current total energy level under the action of said comparison means (21).

**Patentansprüche**

1. Verfahren zum Unterstützen des Landens eines Luftfahrzeugs (1) in der Anflugphase, das sich in einer aktuellen Höhe h befindet und zu einer Landebahn (2) absteigt, indem es mit einer aktuellen Anfluggeschwindigkeit V einer aktuellen Anflugbahn (3) folgt, die mit der Landebahn (2) einen aktuellen Anflugwinkel γ bildet, wobei die aktuelle Anfluggeschwindigkeit V und der aktuelle Anflugwinkel γ ideal jeweils einer konstanten Bezugsanfluggeschwindigkeit Vr und einem konstanten Bezugsanflugwinkel γr, die zu der Landebahn (2) gehören, nahe sein müssen,

**dadurch gekennzeichnet, dass**:

- man zu beiden Seiten der Bezugsanfluggeschwindigkeit Vr einen Bereich mit Anfluggeschwindigkeitswerten vorbestimmt, die ein komplettes Stoppen des Luftfahrzeugs (1) auf der Landebahn (2) in dem Fall erlauben können, in dem der aktuelle Anflugwinkel $\gamma$ mindestens ungefähr gleich dem Bezugsanflugwinkel $\gamma r$ ist, wobei der Anfluggeschwindigkeitswertebereich von einem unteren Grenzwert Vinf und von einem oberen Grenzwert Vsup abgegrenzt ist;
- man zu beiden Seiten des Bezugsanflugwinkels $\gamma r$ einen Bereich (10) mit Anflugwinkelwerten vorbestimmt, die ein komplettes Stoppen des Luftfahrzeugs (1) auf der Landebahn (2) in dem Fall erlauben können, in dem die aktuelle Anfluggeschwindigkeit V mindestens in etwa gleich der Bezugsanfluggeschwindigkeit Vr ist, wobei der Bereich (10) von Anflugwinkelwerten von einem unteren Grenzwert $\gamma$inf und von einem oberen Grenzwert $\gamma$sup begrenzt ist;
- man Folgendes berechnet:

    ■ einen unteren Gesamtenergieschwellenwert Einf, der der Situation entspricht, bei der die aktuelle Anfluggeschwindigkeit V und der aktuelle Anflugwinkel $\gamma$ jeweils gleich dem unteren Grenzwert Vinf und dem unteren Grenzwert $\gamma$inf sind,
    ■ einen oberen Gesamtenergieschwellenwert Esup, der der Situation entspricht, bei der die aktuelle Anfluggeschwindigkeit V und der aktuelle Anflugwinkel $\gamma$ jeweils gleich mit dem oberen Grenzwert Vsup und dem oberen Grenzwert $\gamma$sup sind, und
    ■ die aktuelle Gesamtenergie E des Luftfahrzeugs; und

- man den Vergleich zwischen der aktuellen Gesamtenergie E und dem unteren Schwellenwert Einf und dem oberen Schwellenwert E der Gesamtenergie vornimmt, um einen Hinweis auf die theoretische Möglichkeit für das Luftfahrzeug zu erzielen, auf der Landebahn zu stoppen.

2. Verfahren nach Anspruch 1,
**dadurch gekennzeichnet, dass** man zum Ausführen des Vergleichs einen Index 11 berechnet, der durch folgende Gleichung gegeben ist :

$$I1 = \frac{E - Einf}{Esup - Einf}$$

3. Verfahren nach Anspruch 1,
**dadurch gekennzeichnet, dass**:

- man eine Bezugsgesamtenergie Er berechnet, die der Situation entspricht, bei der die Anfluggeschwindigkeit und der Anflugwinkel jeweils gleich mit der Bezugsanfluggeschwindigkeit Vr und dem Bezugsanflugwinkel $\gamma r$ sind, und
- man den Vergleich zwischen der aktuellen Gesamtenergie E und der Bezugsgesamtenergie Er vornimmt, wobei das Ergebnis dieses Vergleichs selbst mit mindestens einer der Gesamtenergien mit unterem Schwellenwert Einf und oberem Schwellenwert Esup verglichen wird.

4. Verfahren nach Anspruch 3,
**dadurch gekennzeichnet, dass**:

- wenn E größer ist als Er, man E-Er mit Esup-Er vergleichen kann; und
- wenn E kleiner ist als Er, man Er-E mit Er-Einf vergleichen kann.

5. Verfahren nach einem der Ansprüche 1 bis 4,
**dadurch gekennzeichnet, dass** der untere Anfluggeschwindigkeitsgrenzwert Vinf und der obere Anfluggeschwindigkeitsgrenzwert Vsup vorzugsweise mindestens in etwa gleich der Bezugsanfluggeschwindigkeit Vr, jeweils um einige kts verringert oder erhöht sind.

6. Verfahren nach einem der Ansprüche 1 bis 5,
**dadurch gekennzeichnet, dass** der untere Anflugwinkelgrenzwert $\gamma$inf und der obere Anflugwinkelgrenzwert $\gamma$sup

mindestens in etwa gleich dem Bezugsanflugwinkel γr, jeweils um einige Zehntel Grad verringert oder erhöht sind.

7. Verfahren nach einem der Ansprüche 1 bis 6,
**dadurch gekennzeichnet, dass** das Ergebnis des Vergleichs in der Nähe des Luftfahrzeugpiloten angezeigt wird.

8. Verfahren nach einem der Ansprüche 1 bis 7,
**dadurch gekennzeichnet, dass** man mit dem Ergebnis des Vergleichs eine Vorhersageinformation des kompletten Stoppens des Luftfahrzeugs auf der Landebahn verbindet.

9. Landeunterstützungsvorrichtung für ein Luftfahrzeug (1) in der Anflugphase, das sich in einer aktuellen Höhe h befindet zu einer Landebahn absteigt, indem es mit einer aktuellen Anfluggeschwindigkeit V einer aktuellen Anflugbahn (3) folgt, die mit der Landebahn (2) einen aktuellen Anflugwinkel γ bildet, wobei die aktuelle Anfluggeschwindigkeit V und der aktuelle Anflugwinkel γ ideal jeweils einer konstanten Bezugsanfluggeschwindigkeit Vr und einem konstanten Bezugsanflugwinkel γr, die zu der Landebahn (2) gehören, nahe sind,
**dadurch gekennzeichnet, dass** sie Folgendes aufweist:

- Berechnungsmittel (20):

    • die mindestens Informationen empfangen, die die aktuelle Masse m, die aktuelle Höhe h, die aktuelle Anfluggeschwindigkeit V und den aktuellen Anflugwinkel γ des Luftfahrzeugs (1) betreffen, sowie dass:

        + der untere Geschwindigkeitsgrenzwert Vinf und der obere Geschwindigkeitsgrenzwert Vsup einen Bereich von Anfluggeschwindigkeitswerten abgrenzen, der ein komplettes Stoppen des Luftfahrzeugs (1) auf der Landebahn (2) in dem Fall erlauben kann, in dem der aktuelle Anflugwinkel γ mindestens etwa gleich dem Bezugsanflugwinkel γr ist,
        + der untere Anflugwinkelgrenzwert γinf und der obere Anflugwinkelgrenzwert γsup einen Bereich von Anflugwinkelwerten abgrenzen, die ein komplettes Stoppen des Luftfahrzeugs (1) auf der Landebahn (2) in dem Fall erlauben können, in dem die aktuelle Anfluggeschwindigkeit V mindestens in etwa gleich der Bezugsanfluggeschwindigkeit Vr ist, und
        + gegebenenfalls die Bezugsanfluggeschwindigkeit Vr und den Bezugsanflugwinkel γ2, und

    • Folgendes berechnend:

        + einen unteren Gesamtenergieschwellenwert Einf, der der Situation entspricht, bei der die aktuelle Anfluggeschwindigkeit V und der aktuelle Anflugwinkel γ jeweils gleich dem unteren Grenzwert Vinf und dem unteren Grenzwert γinf sind,
        + einen oberen Gesamtenergieschwellenwert Esup, der der Situation entspricht, bei der die aktuelle Anfluggeschwindigkeit V und der aktuelle Anflugwinkel γ jeweils gleich dem oberen Grenzwert Vsup und dem oberen Grenzwert γsup sind,
        + die aktuelle Gesamtenergie E des Luftfahrzeugs; und
        + mit Hilfe des unteren und des oberen Gesamtenergieschwellenwerts Einf und Esup mindestens einen Index (11, 12, 13), dessen Wert für die Tatsache repräsentativ ist, dass das Niveau der aktuellen Gesamtenergie E des Luftfahrzeugs (1) korrekt, übermäßig oder ungenügend ist; und

    - Vergleichsmittel (21), die den Index (11, 12, 13) mit mindestens einem Schwellenwert vergleichen, der einem Übergang zwischen einem korrekten Gesamtenergieniveau und einem übermäßigen oder ungenügenden Gesamtenergieniveau entspricht, wobei die Vergleichsmittel mindestens eine Warn- oder Alarmvorrichtung (22, 23, 25) mindestens in dem Fall aktivieren können, in dem das aktuelle Gesamtenergieniveau E des Luftfahrzeugs (1) übermäßig oder ungenügend ist.

10. Vorrichtung nach Anspruch 9,
**dadurch gekennzeichnet, dass** mindestens eine Warnoder Alarmvorrichtung (25) aus einem üblichen Steuerbildschirm besteht, auf dem eine Warnmeldung oder Alarmmeldung (24) in Zusammenhang mit dem aktuellen Gesamtenergieniveau unter der Einwirkung der Vergleichsmittel (21) angezeigt werden kann.

Fig. 1

20

ho →
m →
h →
V →
γ →
$V_r$ →
$V_{inf}$ →
$V_{sup}$ →
$γ_r$ →
$γ_{inf}$ →
$γ_{sup}$ →

I →

21

22

24

25

23

**Fig. 2**

HIGH ENERGY

24

25

**Fig. 3**

## RÉFÉRENCES CITÉES DANS LA DESCRIPTION

**Documents brevets cités dans la description**

- US 2004075586 A1
- FR 0601395